# EUROPÄISCHE PATENTSCHRIFT

(11) **EP 2 463 687 B1**
(45) Veröffentlichungstag und Bekanntmachung des Hinweises auf die Patenterteilung: **07.10.2015**
(21) Anmeldenummer: 11176374.4
(22) Anmeldetag: 03.08.2011
(51) Int. Cl.: G01V 8/20

(54) **Optoelektronischer Sensor**
Optoelectronic sensor
Capteur optoélectronique

(30) Priorität: 13.12.2010 DE 102010061194
(43) Veröffentlichungstag der Anmeldung: 13.06.2012
(73) Patentinhaber: SICK AG, 79183 Waldkirch (DE)
(72) Erfinder: Dreher, Felix, 79189 Bad Krozingen (DE); Klingelhöfer, Christian, 79110 Freiburg (DE)
(74) Vertreter: Hehl, Ulrich

(56) Entgegenhaltungen:
- EP-A1- 1 464 983
- WO-A1-2008/138598
- DE-A1- 10 136 242
- DE-A1-102005 018 263
- DE-U1-202007 014 387
- US-A1- 2006 071 154

## Beschreibung

Die Erfindung betrifft einen optoelektronischen Sensor, speziell ein Lichtgitter, mit einer Vielzahl von Einzellichtsendern und Einzellichtempfängern nach dem Oberbegriff von Anspruch 1 sowie ein Verfahren zur Objekterkennung und Fremdsendererkennung nach dem Oberbegriff von Anspruch 8.

Lichtgitter umfassen eine Vielzahl von Sendeelementen und zugeordneten Empfangselementen, so dass jeweils ein Paar aus einem Sendeelement und einem Empfangselement eine Lichtschranke bildet, die erkennt, ob der zwischen dem Sendeelement und dem Empfangselement aufgespannte Lichtstrahl von einem Objekt unterbrochen ist oder nicht. Die Sendeelemente und Empfangselemente sind zumeist in jeweils einer Sendeeinheit und einer Empfangseinheit zusammengefasst, die einander gegenüber montiert werden.

Ein wichtiges Anwendungsfeld für Lichtgitter ist die Sicherheitstechnik, wo der Sensor als aktive optische Schutzeinrichtung (AOPD) eingesetzt wird. Die parallelen Lichtstrahlen dienen dabei als eine Art virtuelle Wand, und bei Unterbrechung durch ein Objekt wird beispielsweise eine Gefahrenquelle abgesichert. Bei unzulässigem Eingriff in das so definierte Schutzfeld wird ein sicherheitsgerichteter Abschaltbefehl erzeugt oder die Gefahr auf andere Weise abgewendet, etwa durch Verbringen in eine sichere Parkposition. Da von der Funktionsfähigkeit des Sensors Gesundheit und Leben von Personen abhängen, sind die Anforderungen für in der Sicherheitstechnik eingesetzte Sensoren sehr streng und normiert, beispielsweise in der EN13849 für Maschinensicherheit oder der Gerätenorm EN61496 für berührungslos wirkende Schutzeinrichtungen.

In der Automatisierungstechnik werden Lichtgitter eingesetzt, um die Ausdehnung von Objekten anhand der Anzahl unterbrochener Strahlen zu messen. Beispielsweise kann auf diesem Weg die Höhe von auf einem Förderband bewegten Objekten bestimmt werden, und zwar mit einer Genauigkeit, die durch den Abstand der Lichtstrahlen gegeben ist.

Die Vorstellung eines Lichtstrahls der einzelnen Sendelemente ist idealisiert. Tatsächlich entstehen in Abhängigkeit von den Öffnungswinkeln der strahlformenden Optiken Sende- und Empfangskeulen. Um die Justageanforderungen handhabbar zu halten, empfängt bei üblichen Abständen zwischen Sendeeinheit und Empfangseinheit aufgrund der Sendestrahldivergenz ein Empfangselement Sendelicht nicht nur von dem zugeordneten Sendeelement, sondern auch von dessen Nachbarn. Um Fehlauswertungen zu vermeiden, werden deshalb die Sendeelemente zyklisch aktiviert. Dabei werden nacheinander von jedem Sendeelement einzelne Lichtpulse oder Pakete ausgesandt, und für ein gewisses Zeitfenster wird nur das zugehörige Empfangselement aktiviert, um festzustellen, ob sich in dem jeweiligen Lichtstrahl ein Objekt befindet. Die Lichtstrahlen werden in diesem Zusammenhang auch als Kanäle bezeichnet.

Die Empfangseinheit muss hierfür die Zeitfenster kennen, in denen jeweils ein Sendeelement aktiv ist, und auch wissen, welches Sendeelement in diesem Zeitfenster sendet. Deshalb sind Sendereinheit und Empfangseinheit aufeinander synchronisiert. Um eine Leitungsverbindung zwischen Sendeeinheit und Empfangseinheit zu vermeiden, wird in einer unidirektionalen Kommunikation vom Sender zum Empfänger der Lichtweg für eine optische Synchronisation genutzt.

Beim Einsatz mehrerer Lichtgitter besteht die Gefahr, dass eine Empfangseinheit Lichtstrahlen einer nicht zugehörigen Fremdsendeeinheit empfängt. Auch wenn sich ein Objekt im Überwachungsbereich befindet, welches die Lichtstrahlen der zugeordneten Sendeeinheit unterbricht, wird das Objekt unter Umständen nicht erkannt, weil anstelle des erwarteten Sendesignals ein ununterscheidbares Signal von der Fremdsendeeinheit empfangen wird. Bei baugleichen Lichtgittern kann dieser Fehler nicht ohne weitere Sendecodierung aufgedeckt werden, vor allem wenn es keinen Rückkanal für die Kommunikation gibt. Somit kann zumindest so lange, wie die zugehörige Sendeeinheit und die Fremdsendeeinheit konstantes Zeitverhalten zeigen, ein Objekt unerkannt bleiben. In sicherheitstechnischen Anwendungen führt dies zu einem gefahrbringenden Zustand, der Leben und Gesundheit von Bedienpersonal gefährdet.

Es sind im Stand der Technik mehrere Ansätze bekannt, die geschilderte Situation mit einer Fremdsendeeinheit zu vermeiden oder aufzudecken. Die DE 103 14 581 A1 wählt den Ansatz einer zufälligen Reihenfolge, in der die einzelnen Kanäle aktiviert werden. Dazu müssen aber Sendeeinheit und Empfangseinheit über die verwendete Reihenfolge einig sein. Das ist mit einer echt zufälligen Reihenfolge nur möglich, wenn eine bidirektionale Kommunikation zum Austausch der Zufallszahlen besteht. Deterministische, pseudozufällige Reihenfolgen können Sendeeinheit und Empfangseinheit auch unabhängig in gleicher Abfolge erzeugen. Das schützt dann aber wiederum nicht vor baugleichen Fremdsendeeinheiten, die den gleichen Zufallsalgorithmus verwenden.

Bekannt ist weiterhin, zum eigentlich vorgesehenen Empfangssignal leicht zeitversetzte Lichtpulse zu detektieren. Derartige Sendesignale können nicht von der synchronisierten zugehörigen Sendeeinheit stammen. Diese Fehlerdetektion arbeitet aber gerade nicht in den eigentlich kritischen Zeitschlitzen, sondern entsprechend zeitversetzt dazu. Außerdem ist das Verfahren auf eine hinreichende Verstimmung zwischen den Zeitgebern der zugehörigen Sendeeinheit und der Fremdsendeeinheit angewiesen. Ansonsten kann die Reaktionszeit auf das Auftreten einer baugleichen Sendeeinheit beliebig lang werden.

Die noch unveröffentlichte Anmeldung unter dem Aktenzeichen EP 09 007 413.9 lässt gezielt bei der zyklischen Aktivierung der Lichtstrahlen jeweils ein Sendeelement je Zyklus aus. Dies kann man als Dunkelabtastung bezeichnen, weil der Empfänger aktiv ist, obwohl der Sender gar nicht sendet. Die Empfangseinheit kennt die Zeitfenster, in denen dies geschieht. Wird dennoch ein Sendesignal empfangen, so muss dies von einem Fremdsender stammen. Auch dieses Vorgehen ist rein deterministisch, wenn auch mit deutlich verlängerter Zykluszeit. Dadurch verringert sich die Wahrscheinlichkeit, dass zwei Systeme zufällig genau synchron zueinander laufen. Prinzipiell bleibt aber die Gefahr eines unentdeckten Fremdsenders bestehen.

Aus der DE 10 2007 024 210 A1 ist bekannt, die Lichtstrahlen eines Lichtgitters gruppenweise in Modulen zusammenzufassen, die parallel zueinander einen auf das jeweilige Modul beschränkten Strahlenzyklus aktivieren und auswerten. Damit wird die Ansprechzeit verbessert, nicht aber das Problem der Fremdsendererkennung gelöst.

Grundsätzlich kann die Detektion eines Fremdsenders gleicher Bauart innerhalb eines gegebenen Zeitraums nur mit einer Wahrscheinlichkeit kleiner Eins erkannt werden. Verhalten sich beide Sender deterministisch, so sind sie anhand ihres gesendeten Lichts nur unterscheidbar, wenn sie hinreichend desynchronisiert sind. Vorhersagen darüber, wie lange ein synchroner Zustand anhält, sind nicht steuerbar und kaum verlässlich möglich.

Aus der EP 1 464 983 A1 ist ein optoelektronisches Überwachungssystem mit veränderbarer Sendepulsfolge zum Reduzieren von Störsignalen bekannt. Zumindest im Fall einer erkannten, von einem anderen System ausgehenden Störung werden die Abtastperiode, mit der der Überwachungsbereich über einen jeweiligen optischen Kanal abgetastet wird, der Zeitpunkt, zu dem der Überwachungsbereich über einen jeweiligen optischen Kanal während einer jeweiligen Abtastperiode mit wenigstens einem Lichtpuls beaufschlagt wird, die Pulsfolge bzw. Pulsabstände innerhalb eines jeweiligen optischen Kanals und/oder die Reihenfolge nach dem Zufallsprinzip variiert, in der zumindest zwei optische Kanäle nacheinander aktiviert werden.

Da sämtliche Ansätze im Stand der Technik, die ohne bidirektionale Kommunikation auskommen, vollständig deterministisch und zyklisch ablaufen, sind sie demnach nicht in der Lage, einen zusätzlichen Sender gleicher Bauart zu detektieren, der genau synchron zu der zugehörigen Sendeeinheit läuft.

Daher ist Aufgabe der Erfindung, die Fremdsendererkennung eines gattungsgemäßen Sensors weiter zu verbessern.

Diese Aufgabe wird durch einen optoelektronischen Sensor gemäß Anspruch 1 und ein Verfahren zur Objekterkennung und Fremdsendererkennung gemäß Anspruch 8 gelöst. Dabei geht die Erfindung von einem Grundgedanken ähnlich der Dunkelabtastung aus. Lichtsignale werden nacheinander von den Einzellichtsendern ausgesandt und jeweils nur der zugehörige Einzellichtempfänger aktiviert. Alternativ sind mehrere Kanäle parallel aktiv, solange sie weit genug voneinander beabstandet sind, um sich nicht zu stören. In einer Scanperiode, also beispielsweise in jedem zyklischen Durchgang durch die Kanäle oder auch nur in ausgewählten Zyklen, wird mindestens ein Kanal für einen Test ähnlich einer Dunkelabtastung ausgewählt. In diesem Testkanal wird das Sendemuster verändert, also verschoben, in seinem Amplitudenverlauf verändert, beispielsweise durch Hinzufügen oder Weglassen von Pulsen, verkürzt oder sogar ganz auf Null gesetzt, wobei der letztgenannte Fall einer echten Dunkelabtastung entspricht. Der zugehörige Einzellichtempfänger sollte dann während des Testzeitfensters nur das veränderte Signal empfangen. Sofern aber ein baugleicher Fremdsender genau in diesem Moment das unveränderte Signal sendet, wird dennoch entgegen der Erwartung ein unveränderter Lichtstrahl erkannt. Dadurch wird der Fremdsender aufgedeckt.

Um den Determinismus aufzubrechen, wird das Zeitfenster und damit der Kanal für das veränderte Sendemuster zufällig gewählt. Auch mit dem Zufallselement bleibt eine gewisse Wahrscheinlichkeit bestehen, dass sich zwei Sender ununterscheidbar verhalten. Diese Wahrscheinlichkeit nimmt aber mit der Zeit exponentiell ab.

Die Erfindung hat somit den Vorteil, dass mit höchster Wahrscheinlichkeit selbst eine perfekt synchron getaktete fremde Sendeeinheit gleicher Bauart in kurzer Zeit erkannt wird.

Es ist prinzipiell denkbar, das zufällig gewählte Testzeitfenster zwischen Sendeeinheit und Empfangseinheit zu übertragen. Eine bidirektionale Kommunikation ist über eine Leitung, eine Funkverbindung oder, wenn Einzellichtsender und Einzellichtempfänger gemischt auf Sendeeinheit und Empfangseinheit verteilt werden, auch auf dem optischen Weg möglich. Ein großer Vorteil der Erfindung ist aber, dass sie auch dann funktioniert, wenn es keinen Kommunikationskanal von der Empfangseinheit beziehungsweise deren Empfängersteuerung zu der Sendeeinheit beziehungsweise deren Sendesteuerung gibt.

In der Sendersteuerung und in der Empfängersteuerung sind Gruppen von Einzellichtsendern und zugehörigen Einzellichtempfängern gebildet, wobei in einer Scanperiode jeweils eine Gruppe ausgewählt ist und das mindestens eine Testzeitfenster nur bedingt zufällig wählbar ist, so dass nur das Sendesignal eines Einzellichtsenders der ausgewählten Gruppe veränderbar ist. Dadurch wird die Erwartungshaltung der Empfangseinheit deutlich präziser, denn die möglichen Kanäle für das veränderte Sendemuster bleiben in einem gegebenen Zeitraum auf eine Gruppe beschränkt. Die Gruppenaufteilung erfolgt vorzugsweise so, dass jeder Kanal genau einer Gruppe zugewiesen ist. Abweichungen sind aber denkbar, beispielsweise nicht zugeordnete Strahlen, die ausschließlich der Justierung oder Synchronisierung dienen. Die Gruppeneinteilungen sind in der Sendeeinheit und der Empfangseinheit vorab bekannt, etwa durch Werkseinstellung, Parametrierung oder einen Einlernmodus. Am einfachsten sind gleich große Gruppen, die jeweils benachbarte Kanäle umfassen. Abweichend können aber auch unterschiedliche Gruppengrößen in durcheinandergemischter Anordnung gebildet werden. Jede Gruppe sollte mindestens zwei Kanäle umfassen, wobei auch hier Ausnahmen denkbar sind.

Die Auswahl einer Gruppe erfolgt für eine Scanperiode anhand einer in Sendersteuerung und Empfangssteuerung bekannten deterministischen Sequenz. Durch diese Gruppensequenz wird die Testreihenfolge der Kanäle auf Fremdlichtsender gesteuert. Ebenso wie die Gruppenaufteilung selbst ist auch die Sequenz sowohl in der Sendeeinheit als auch in der Empfangseinheit vorab bekannt. Sie kann beispielsweise in Form einer Liste oder eines Algorithmus' abgelegt sein. Wegen der bekannten Sequenz durch die Gruppen und einer Zufallswahl innerhalb der Gruppe werden deterministische und zufällige Komponenten auf günstige Weise vermischt.

Ein Sonderfall liegt vor, wenn es nur eine einzige Gruppe mit allen Kanälen gibt. Hierbei wird aber die Mischung aus deterministischen und zufälligen Komponenten aufgegeben. Dadurch ist beispielsweise nicht immer sichergestellt, dass die Prüfung auf Fremdsender in den einzelnen Kanälen zumindest einigermaßen gleichmäßig erfolgt.

Die Empfängersteuerung ist bevorzugt dafür ausgebildet, einen Fehlerzustand des Sensors daran zu erkennen, dass während der Scanperiode, insbesondere von den Einzellichtempfängern der ausgewählten Gruppe, eine andere Anzahl nicht veränderter Sendesignale empfangen wird als erwartet. Der Empfangseinheit ist bekannt, in welchem Zeitraum und in welcher Gruppe ein verändertes Sendemuster ausgesandt wird. Zusätzlich kann auch bekannt sein, welche Veränderungen möglich sind, um veränderte Sendemuster von beliebigen Signalen zu unterscheiden. Die erwartete Anzahl empfangener, nicht veränderter Sendesignale entspricht somit der Vielzahl von Einzelstrahlauswertungszeitfenstern innerhalb der Scanperiode minus die bekannte Anzahl ausgewählter Testzeitfenster. Sind Gruppen gebildet, so wird als Basis nicht die Gesamtzahl aller Einzelstrahlauswertungszeitfenster der Scanperiode angenommen, sondern nur derjenigen, in denen Kanäle der Gruppe aktiv sind. Die Erwartungshaltung bezieht sich damit spezifisch auf die Gruppe. Natürlich liegt zugleich für die Gesamtheit aller Kanäle eine Erwartungshaltung vor, nämlich dass außerhalb der Gruppe keine Veränderung der Sendemuster stattfindet. Weicht die Anzahl tatsächlich empfangener, nicht veränderter Sendesignale von der Erwartungshaltung ab, so führt dies zumindest zu einer entsprechenden Meldung oder Anzeige, im Falle sicherheitstechnischer Anwendung auch zu einer Absicherung des überwachten Gefahrenbereichs. Denn werden mehr nicht veränderte Sendesignale empfangen als erwartet, so wird dies auf einen Fremdsender zurückgeführt, der in den Testzeitintervallen das absichtlich veränderte Sendesignal ergänzt oder ersetzt. Damit ist die Überwachungsfunktion beeinträchtigt.

Die Sendersteuerung und die Empfängersteuerung sind bevorzugt dafür ausgebildet, in einer Scanperiode jedem Einzellichtsender und jedem Einzellichtempfänger ein Einzellichtstrahlauswertungszeitfenster zuzuweisen. Damit ist in jeder Scanperiode jeder Kanal aktiv. Noch bevorzugter wird jedem Kanal genau ein Einzellichtstrahlauswertungszeitfenster zugewiesen, um in jeder Scanperiode Objekteingriffe in jeden Lichtstrahl mit der geringsten Anzahl von Einzelabtastungen zu erkennen. Üblicherweise wird ein Scanzyklus vom ersten bis zum letzten Kanal entsprechend der Position der Lichtstrahlen gebildet. Von dieser Reihenfolge kann aber auch abgewichen werden. Da mindestens einem Einzellichtsender als Einzellichtstrahlauswertungszeitfenster ein Testzeitfenster zugewiesen wird, bedeutet Zuweisung eines Einzellichtstrahlauswertungszeitfensters oder Aktivierung eines Kanals wegen der veränderten Sendesignale im Testzeitfenster nicht notwendig auch eine vollständige Strahlüberwachung. Das gilt beispielsweise dann, wenn die Veränderung des Sendesignals im Sinne einer echten Dunkelabtastung darin besteht, gar kein Sendesignal auszusenden. Allgemein kann aber auch das veränderte Sendesignal zur Objektdetektion verwendet werden, indem die Empfängersteuerung einen Kanal als nicht unterbrochen erkennt, wenn entweder das unveränderte oder das vorzugsweise in bekannter Weise veränderte Signal empfangen wird.

Vorteilhafterweise findet die Auswahl von Testzeitfenstern nur in einem Teil der Scanperioden statt. Damit werden regelmäßig, vorzugsweise schneller als die Ansprechzeit, vollständige Überwachungszyklen in herkömmlicher Weise ohne veränderte Sendesignale ausgeführt, so dass die erfindungsgemäße Fremdsendererkennung in keiner denkbaren Weise die Überwachungsfunktion beeinträchtigt. Eine Fremdsendererkennung erfolgt dementsprechend nur regelmäßig in jeder zweiten oder r-ten Scanperiode, prinzipiell auch unregelmäßig mit einer wechselnden Anzahl zwischengeschalteter vollständiger Überwachungszyklen. Ein Gruppenwechsel gemäß der deterministischen Gruppensequenz wird dann vorzugsweise auch nur in den Scanperioden vorgenommen, in denen ein Testzeitfenster liegt, da sonst die Gruppensequenz nicht optimal genutzt wird.

Nach einem ähnlichen Gedanken wird das Sendesignal dadurch verändert, dass mindestens einer aus einer Vielzahl von Pulsen weggelassen wird. Beispielsweise besteht das unveränderte Sendesignal aus einer Folge von drei Einzelpulsen, das veränderte Sendesignal aus einer Folge von zwei Einzelpulsen. Dann ist einerseits die Manipulation eindeutig zu erkennen, andererseits aber auch das veränderte Sendesignal für eine sichere Objektdetektion eindeutig identifizierbar.

Die Empfängersteuerung ist bevorzugt dafür ausgebildet, einen Eingriff in einen Lichtstrahl zwischen einem Einzellichtsender und einem Einzellichtempfänger zu erkennen, wenn der Einzellichtempfänger in einem Auswertungszyklus mit mindestens zwei aufeinanderfolgenden Scanperioden kein vollständiges Sendesignal empfängt. Somit wird also ein einmaliger Eingriff in einen Lichtstrahl geduldet und als kurze, vorübergehende Störung betrachtet. Dabei kann das vollständige Sendesignal sowohl das veränderte als auch das nicht veränderte Sendesignal sein.

Jeder Auswertungszyklus weist bevorzugt mindestens eine Scanperiode ohne Testzeitfenster auf, oder in jedem Auswertungszyklus ist jeder Einzellichtsender und jeder zugehörige Einzellichtempfänger in mindestens einem Einzelstrahlauswertungszeitfenster aktiviert, das kein Testzeitfenster ist. Die veränderten Sendesignale werden so ganz analog zu einer tolerierten Störung durch eine kurze Strahlunterbrechung in nur einem Teil der Scanperioden eines Auswertungszyklus' behandelt. Dazu erfolgt die Gruppenauswahl je Scanperiode und/oder die Zufallsauswahl innerhalb der Gruppe derart, dass jeder Kanal zumindest einmal je Auswertungszyklus von der Veränderung des Sendemusters ausgenommen bleibt. Dies kann beispielsweise geschehen, indem in mindestens einer Scanperiode des Auswertungszyklus' ein vollständiger Überwachungszyklus ausgeführt wird oder indem verhindert wird, dass derselbe Kanal innerhalb eines Auswertungszyklus' mehrfach für ein verändertes Sendemuster gewählt wird, insbesondere in allen Scanperioden des Auswertungszyklus'.

Bevorzugt ist eine Absicherungseinheit vorgesehen, von der bei Erkennung eines unzulässigen Eingriffs in einen Lichtstrahl oder bei Erkennung eines Fehlerzustands ein Absicherungssignal, insbesondere ein sicherheitsgerichtetes Abschaltsignal ausgebbar ist. Es erfolgt somit eine Absicherung der überwachten Gefahrenquelle, sobald ein kritischer Zustand erkannt wird. Ein denkbarer Fehlerzustand tritt bei erfindungsgemäßer Erkennung eines Fremdsenders ein. Eine Objekterkennung muss noch nicht kritisch sein, da auch zulässige Eingriffe vorgesehen sein können. Dazu zählt das absichtliche Deaktivieren von Kanälen für bekannte Objekte ("Blanking"), aber auch ein Eingriff, der aufgrund räumlicher oder zeitlicher Ausdehnung nicht als kritisch eingestuft wird. Alternativ zu einer sicherheitsgerichteten Abschaltung wird aus der Zahl und Position der unterbrochenen Strahlen ein Messwert für die Ausdehnung des eingreifenden Objekts ausgegeben. In vertikaler Anordnung des Sensors ist dies ein Messwert für die Objekthöhe.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Lichtgitters;
- Fig. 2a: zeitliche Intensitätsverläufe der Einzellichtsender des Lichtgitters gemäß Figur 1 zur Erläuterung einer Scanperiode;
- Fig. 2b: eine Matrixdarstellung des Zeitverlaufs der Sendesignale gemäß Figur 2a;
- Fig. 2c: eine vereinfachte Zeilendarstellung der Matrix gemäß Figur 2b;
- Fig. 3: eine Darstellung der Einzellichtstrahlen des Lichtgitters gemäß Figur 1 und deren Einteilung in Gruppen;
- Fig. 4: ein Ablaufdiagramm der erfindungsgemäßen Fremdsendererkennung; und
- Fig. 5a-c: Zeilendarstellungen analog Figur 2c zur Erläuterung der erfindungsgemäßen Veränderung von Sendesignalen mit Gruppensequenzen.

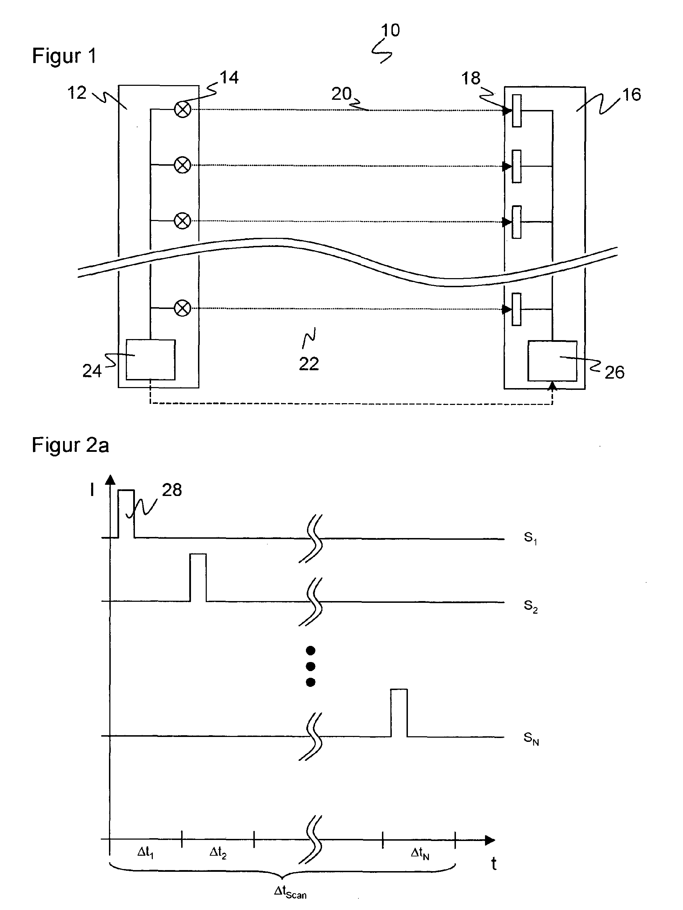

Figur 1 zeigt eine schematische Blockdarstellung eines Lichtgitters 10. Eine Sendeeinheit 12 mit einer Vielzahl von Lichtsendern 14 und eine Empfangseinheit 16 mit einer Vielzahl von Lichtempfängern 18 sind einander gegenüberstehend angeordnet. Von den Lichtsendern 14 wird jeweils ein Lichtstrahl 20 zu einem zugeordneten Lichtempfänger 18 gesandt. Somit spannt das Lichtgitter 10 eine Vielzahl von Lichtstrahlen 20 oder Kanälen auf, um Objekte in einem Überwachungsbereich 22 zwischen der Sendeeinheit 12 und der Empfangseinheit 16 zu erkennen. Dabei kann den Lichtsendern 14 und den Lichtempfängern 18 abweichend von der Darstellung eine Optik samt Blenden oder dergleichen zugeordnet sein, um den Lichtstrahl 20 zu einer Sendekeule mit definierter Divergenz zu formen beziehungsweise gezielt und nur innerhalb einer bestimmten Empfangskeule auf einen Lichtempfänger 18 zu lenken.

In der Sendeeinheit 12 ist eine Sendersteuerung 24 direkt oder mittelbar mit allen Lichtsendern 14 verbunden, um deren Aktivität zu steuern und sie dazu zu veranlassen, bestimmte Signalformen auszusenden. Als Gegenstück ist in der Empfangseinheit 16 eine Empfangssteuerung 26 vorgesehen, die direkt oder mittelbar mit allen Lichtempfängern 18 verbunden ist, um die Empfangssignale auszuwerten. Anhand der Empfangssignale erkennt die Empfangssteuerung 26, welche Lichtstrahlen 20 unterbrochen sind und welche nicht.

Gemäß dem einleitend beschriebenen Objekterkennungsverfahren strahlen die Lichtsender 14 nicht im Dauerbetrieb, sondern sie werden zyklisch nacheinander aktiviert, um Mehrdeutigkeiten in der Empfangseinheit 16 zu vermeiden. Dazu werden Sendersteuerung 24 und Auswertungseinheit 26 optisch synchronisiert, wie durch eine gestrichelte Linie angedeutet.

Es sind abweichend von der Darstellung auch Lichtgitter bekannt, bei denen die Lichtsender 14 und Lichtempfänger 18 auf Sendeeinheit 12 und Empfangseinheit 16 verteilt werden. Dann gibt es Lichtwege in beiden Richtungen, die auch zur bidirektionalen Kommunikation verwendet werden können. Die Erfindung bedarf keiner bidirektionalen Kommunikation, sondern kann auch in Lichtgittern 10 eingesetzt werden, bei denen wie in Figur 1 alle Lichtsender 14 in der Sendeeinheit 12 und alle Lichtempfänger 18 in der Empfangseinheit 16 angeordnet sind.

Fig. 2a zeigt einen zeitlichen Intensitätsverlauf der Lichtsender 14, um die zyklische Auswertung zu erläutern. Eine Scanperiode Δt_{Scan} wird in einzelne Zeitfenster Δt₁...Δtₙ unterteilt. Abweichend kann zwischen den Zeitfenstern Δt₁...Δtₙ jeweils ein Zeitversatz liegen. Nur innerhalb seines zugewiesenen Zeitfensters Δtᵢ sendet ein Lichtsender 12 ein Sendesignal 28 aus, das wie dargestellt ein Einzelpuls ist, aber auch eine aufwändigere Codierung beispielsweise mit Mehrfachpulsen aufweisen kann. Der zugehörige Lichtempfänger 16 ist ebenfalls nur in dem zugewiesenen Zeitfenster Δtᵢ aktiviert. Mit diesem Zeitmultiplexing der Kanäle wird eine Mehrdeutigkeit der Zuordnung eines empfangenen Sendesignals zu einem Kanal vermieden.

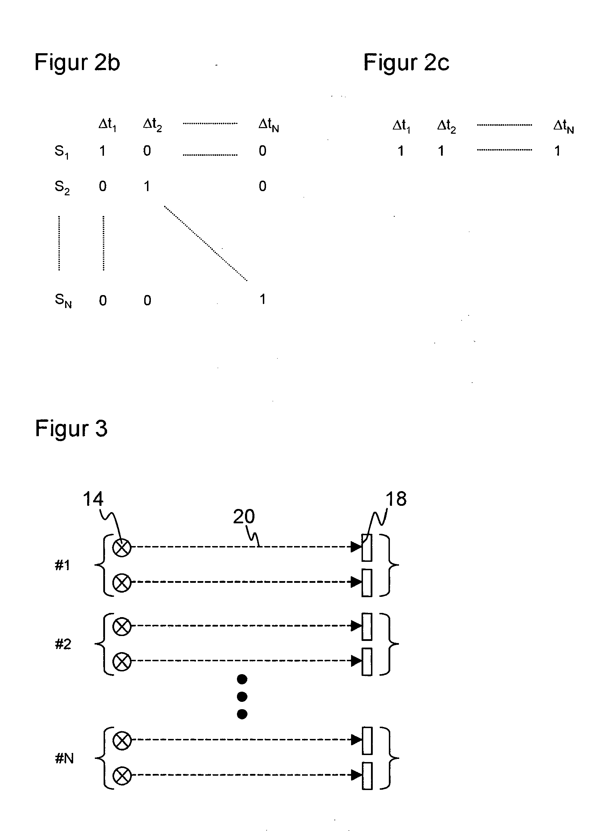

Das Schema für das Zeitmultiplexing wird in Figur 2b vereinfacht in Form einer binären Matrix dargestellt. Dabei steht eine Null für einen inaktiven Kanal und eine Eins für das Aussenden des vollständigen Sendesignals gemäß Figur 2a bei gleichzeitiger Aktivierung des zugehörigen Lichtempfängers.

Bei dem einfachen Multiplexingschema der Figur 2a, in dem jeder Kanal entsprechend seiner Anordnung nacheinander und in gleicher Weise aktiviert wird, entsteht dabei die Einheitsmatrix. Da sich ohnehin nur von Null verschiedene Einträge auf der Diagonalen finden, genügt eine äquivalente Darstellung als Zeile gemäß Figur 2c. Ein aufwändigeres Multiplexingschema lässt sich durch lineare Transformationen ebenfalls in diese Darstellung bringen.

Erfindungsgemäß ist vorgesehen, die Kanäle wie in Figur 3 illustriert zu Gruppen #1...#N zusammenzufassen. Im gewählten Beispiel bilden jeweils zwei benachbarte Kanäle eine Gruppe. Alternativ können die Gruppen unterschiedlich viele und auch nicht benachbarte Kanäle enthalten. Ein Spezialfall der Gruppendefinition ist, dass alle Kanäle einer einzigen Gruppe zugewiesen sind.

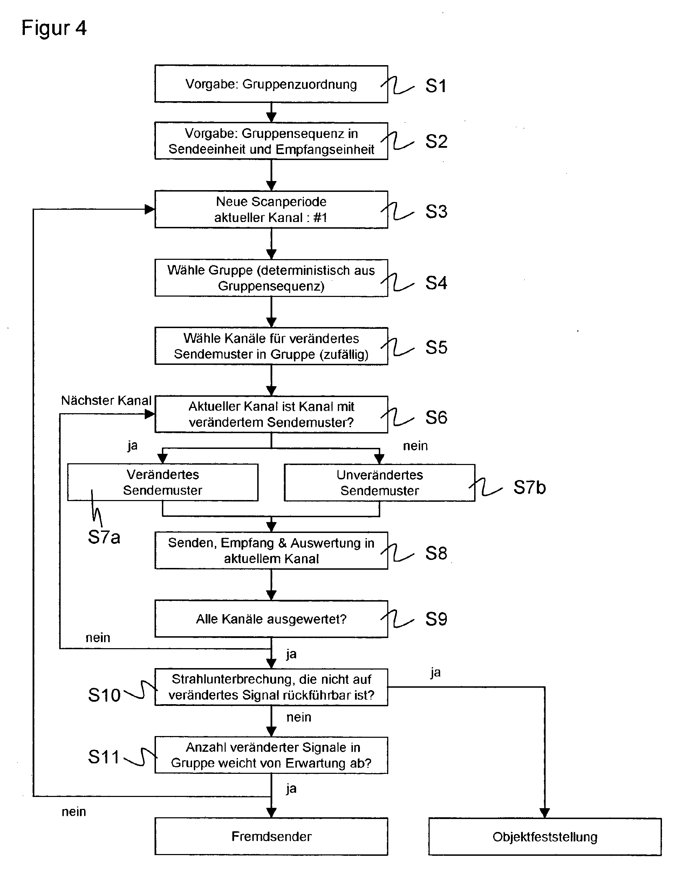

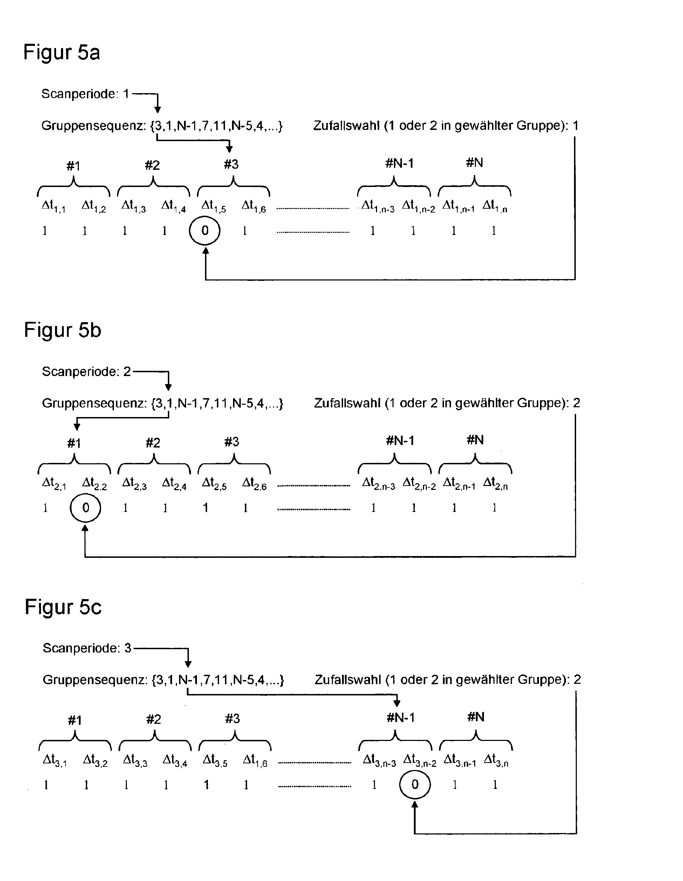

Figur 4 erläutert allgemein den Ablauf der erfindungsgemäßen Fremdsendererkennung in dem Lichtgitter 10. Anhand der Figur 5 wird dieser Ablauf dann noch einmal an einem Einzelbeispiel erläutert.

In einem ersten Schritt S1 werden in der Sendersteuerung 24 und der Empfängersteuerung 26 vorab die Gruppenzuordnungen bekannt gemacht. Dazu wird, wie anhand der Figur 3 beschrieben, die Gesamtzahl der Strahlen in N Gruppen geteilt.

In einem zweiten Schritt S2 wird eine Gruppensequenz festgelegt. Die Gruppensequenz ist eine deterministische Folge von nacheinander auszuwählenden Gruppen. Vorzugsweise entspricht die Häufigkeit, mit der jede Gruppe in der Gruppensequenz genannt ist, für einen gleichmäßigen Test auf Fremdsender in allen Kanälen schon auf kleinen Zeitskalen der Mächtigkeit der Gruppe. Im einfachsten Fall genügt eine Gruppensequenz, welche die Gruppen einfach durchzählt. Solche einfachen Gruppensequenzen erhöhen aber die Wahrscheinlichkeit, dass ein Fremdsender dasselbe Verhalten zeigt. Vorzugsweise wird deshalb eine gut gemischte Gruppensequenz vorgegeben. Dies geschieht beispielsweise in einem Zufallsverfahren durch Ziehen ohne Zurücklegen, wobei aber jede Gruppe in der Grundgesamtheit entsprechend ihrer Mächtigkeit, bei gleicher Gruppengröße also gleich oft vertreten ist. Dabei ist zu beachten, dass dieses Zufallsverfahren kein echtes Zufallselement einführt, weil das Resultat dennoch eine vorab festgelegte, deterministische Gruppensequenz ist. Die Gruppensequenz ist der Sendesteuerung 24 und der Empfängersteuerung 26 bekannt. Sie kann für alle Sendeeinheiten 12 gleicher Bauart identisch sein. Beide Vorgaben der Schritte S1 und S2 können ab Werk vorgesehen sein oder in einer anfänglichen Parametrierung beziehungsweise Einlernphase eingegeben werden. Ist eine bidirektionale Kommunikation möglich, können die Vorgaben auch vor und während des Betriebs zwischen Sendesteuerung 24 und Empfangssteuerung 26 ausgetauscht werden.

In einem dritten Schritt S3 beginnt dann eine Scanperiode mit dem ersten Kanal. Die Reihenfolge der Kanäle kann, muss aber nicht ihrer Position entsprechen.

In einem vierten Schritt S4 wird anhand der Gruppensequenz eine Gruppe für die aktuelle Scanperiode ausgewählt. Dazu wird jeweils ein Zeiger auf das nächste Element der Gruppensequenz beziehungsweise am Ende der Gruppensequenz wieder auf das erste Element versetzt, um in der folgenden Scanperiode eine andere Gruppe gemäß der Gruppensequenz auszuwählen.

In einem fünften Schritt S5 werden innerhalb der ausgewählten Gruppe von der Sendesteuerung 24 ein oder mehrere Kanäle zufällig für eine Veränderung des Sendesignals bestimmt. Die Empfangssteuerung 26 kennt die zufällig ausgewählten Kanäle nicht. Die Zufallsauswahl ist ein echtes Zufallselement und erfolgt im Betrieb. Selbstverständlich können dennoch deterministisch erzeugte Pseudo-Zufallszahlen verwendet werden. Um sich von baugleichen Sendern zu unterscheiden, wird dann beispielsweise ein individueller Anfangswert wie die Seriennummer verwendet.

In einem sechsten Schritt S6 beginnt der eigentliche Scanzyklus durch die Kanäle. Zunächst wird geprüft, ob der aktuelle Kanal einer derjenigen ist, welcher im fünften Schritt S5 für ein verändertes Sendesignal ausgewählt wurde. Ist das der Fall, so wird im nachfolgenden Schritt S7a für den aktuellen Kanal ein verändertes Sendemuster gewählt, das verschoben, in seinem Amplitudenverlauf verändert oder unvollständig ist beziehungsweise sogar gänzlich zur Nichtaktivierung des aktuellen Kanals führt. Wenn andererseits der aktuelle Kanal nicht für ein verändertes Sendesignal ausgewählt ist, wird alternativ in einem nachfolgenden Schritt S7b das vollständige, unveränderte Sendemuster für den aktuellen Kanal festgelegt.

In einem achten Schritt S8 wird das derart festgelegte Sendemuster ausgesandt und der zugehörige Lichtempfänger 18 aktiviert. Die Empfängersteuerung 26 stellt fest, ob im aktuellen Kanal ein verändertes oder unverändertes Sendesignal empfangen wurde oder ob eine Strahlunterbrechung erkannt wird. Die Empfängersteuerung 26 kennt die Kanäle mit veränderten Sendesignalen nicht. Deshalb ist eventuell aufgrund eines Einzelstrahls noch keine Entscheidung über einen Fremdsender oder einen Objekteingriff möglich. Beispielsweise kann ein unterbrochener Strahl einen Objekteingriff oder eine absichtliche Veränderung des Sendesignals gemäß Schritt S7a bedeuten. Ein nicht unterbrochener Strahl könnte auf einen Fremdsender oder auf einen objektfreien Strahlbereich zurückzuführen sein.

In einem neunten Schritt S9 wird geprüft, ob in der laufenden Scanperiode alle Kanäle abgearbeitet wurden. Ist das nicht der Fall, wird die Schleife mit dem nächsten Kanal bei Schritt S6 fortgesetzt.

Ansonsten liegt zu diesem Zeitpunkt die Kanalauswertung für alle Kanäle der aktuellen Scanperiode vor. Es ist demnach für jeden Kanal bekannt, ob das veränderte, das unveränderte oder nur ein unvollständiges beziehungsweise kein Signal erfasst wurde. Anhand der Erwartungshaltung der Empfangseinheit 16 erfolgt nun die eigentliche Auswertung. Diese Auswertung kann je nach Situation auch schon früher erfolgen, sobald hinreichend viele Kanäle ausgewertet sind, um zu entscheiden, dass ein Fremdsender oder ein Objekteingriff vorliegt.

In einem zehnten Schritt S10 wird ein Objekteingriff festgestellt, wenn eine Strahlunterbrechung erkannt wird, die sich nicht auf ein verändertes Sendesignal zurückführen lässt. Dabei ist zwischen den verschiedenen Möglichkeiten einer Veränderung des Sendesignals zu differenzieren. Wenn das Sendesignal so verändert wird, dass es immer noch eindeutig identifizierbar bleibt, beispielsweise durch veränderte Pulsformen, Hinzufügen von Pulsen oder zeitliche Verschiebung von Pulsen, kann es ohne Objekteingriff keine Strahlunterbrechungen geben. Wenn aber die Veränderung des Sendesignals in einer Verkürzung oder einem Auslassen besteht, also im Falle einer echten Dunkelabtastung, so gibt es für Strahlunterbrechungen zwei mögliche Ursachen, nämlich einen Objekteingriff oder die absichtliche Veränderung des Sendesignals. Da der Empfängersteuerung 26 bekannt ist, in welcher Gruppe Sendesignale verändert wurden, bedeutet auch bei Dunkelabtastung jede Strahlunterbrechung au-βerhalb dieser Gruppe einen Objekteingriff. Innerhalb der Gruppe dürfen ohne Objekteingriff maximal so viele Strahlunterbrechungen vorliegen, wie veränderte Sendesignale verwendet wurden.

Wie einleitend erläutert, kann im Anschluss an eine als Objekteingriff zu wertende Strahlunterbrechung noch eine Prüfung erfolgen, ob dies ein zulässiger Eingriff ist, der beispielsweise kurz genug ist, um toleriert zu werden, oder einer geplanten Objektbewegung entspricht. Andernfalls erfolgt in sicherheitstechnischer Anwendung eine sichere Abschaltung an einem Schaltausgang (OSSD, Output Signal Switching Device).

Zwar ist der Empfängersteuerung 26 nicht bekannt, welchen Lichtsendern 14 im Schritt S7a ein verändertes Sendemuster zugewiesen wurde. Sehr wohl hat die Empfängersteuerung 26 aber die Erwartungshaltung, dass es innerhalb der aus der Gruppensequenz bekannten gewählten Gruppe genau so viele derartige Lichtsender 14 gibt, wie im Schritt S5 ausgewählt wurden. Weicht daher die Anzahl der tatsächlich erkannten veränderten Signale von dieser Erwartungshaltung ab, so gilt ein Fremdsender als erkannt. Andernfalls beginnt nach unkritischen Ergebnissen der Schritte S10 und S11 die nächste Scanperiode im Schritt S3.

Das soeben erläuterte Verfahren soll nun anhand eines Einzelbeispiels und der Figur 5 erläutert werden. Dabei zeigen die Figuren 5a-c die ersten drei Scanperioden, wobei nur die erste Scanperiode im einzelnen erklärt wird. In dem Beispiel wird jeweils nur ein Kanal innerhalb jeder Gruppe für ein verändertes Sendemuster ausgewählt.

Zunächst sind wie in Figur 3 im Schritt S1 jeweils Paare von nebeneinander angeordneten Kanälen zu den Gruppen zusammengefasst. Die vorab im Schritt S2 festgelegte Gruppensequenz beginnt beispielhaft mit {3, 1, N-1, 7, 11, N-5, 4, ...}.

Mit Beginn der ersten Scanperiode wird nun im Schritt S4 die Gruppe #3 als erste Gruppe gemäß Gruppensequenz gewählt. Innerhalb dieser Gruppe wird im Schritt S5 per Zufall einer der Kanäle gewählt. Hier entscheidet der Zufall beispielhaft für den ersten Kanal innerhalb der Gruppe. Somit ist insgesamt für die erste Scanperiode der fünfte Kanal als Kanal für das veränderte Sendemuster gewählt. Entsprechend ist dort in Figur 5a eine Null für das veränderte Sendesignal eingetragen.

In der Schleife der Schritte S6 bis S9 senden nun alle Kanäle mit Ausnahme des fünften Kanals ein vollständiges Sendesignal. Sofern kein Objekteingriff vorliegt, wird dementsprechend in diesen Kanälen keine Strahlunterbrechung erkannt. Der fünfte Kanal dagegen wird bei der entsprechenden Schleifeniteration des Schrittes S8 als verändert oder sogar unterbrochen erkannt, sofern nicht von einem Fremdsender synchron das vollständige Sendesignal auf den entsprechenden Lichtempfänger 18 trifft.

Ist demnach im Schritt S10 irgend ein Kanal mit Ausnahme des fünften oder sechsten Kanals unterbrochen, welche die für die erste Scanperiode ausgewählte Gruppe #3 bilden, so wird dies als Objektfeststellung erkannt. Sind sowohl der fünfte als auch der sechste Kanal unterbrochen, so sind zu viele Strahlen der ausgewählten Gruppe #3 unterbrochen, so dass ebenfalls eine Objektfeststellung erfolgt. Wenn umgekehrt im Schritt S11 sowohl der fünfte als auch der sechste Kanal nicht unterbrochen ist, so muss auf einen Fremdsender geschlossen werden. Zwar weiß die Empfängersteuerung 26 wegen der Zufallsauswahl in Schritt S5 nicht, ob der fünfte oder der sechste Kanal für das veränderte Sendemuster gewählt ist. Sie erwartet aber, dass genau einer der beiden Kanäle aus Gruppe #3 verändert ist.

Damit ist die erste Scanperiode beendet. Die Auswahl des jeweiligen Kanals mit verändertem Sendemuster für die beiden nachfolgenden Scanperioden sind in analoger Weise in den Figuren 5b und 5c gezeigt.

Das Beispiel ist vereinfacht, weil nur jeweils ein Kanal je Gruppe für ein verändertes Sendemuster ausgewählt wird. Aber auch bereits Figur 4 zeigt nur einen beispielhaften Ablauf. Die Auswertung in dem Schritt S10 und S11 muss auch nicht ans Ende einer Scanperiode verschoben werden, sondern kann fortlaufend erfolgen. Beispielsweise erfolgt eine sicherheitsgerichtete Abschaltung sofort nach Erkennen einer Strahlunterbrechung außerhalb der gewählten Gruppe, und die übrigen Auswertungen erfolgen schon, sobald alle Kanäle der Gruppe ausgewertet sind.

Eine Veränderung eines Sendemusters muss auch nicht in jeder Scanperiode erfolgen. Es können jeweils eine oder mehrere vollständige Scanperioden zwischengeschaltet sein, in denen also alle Kanäle ein vollständiges Sendesignal verwenden und damit nur eine Objektfeststellung, nicht aber eine Fremdsendererkennung erfolgt.

Beispielsweise wird ein Auswertungszyklus mit zwei Scanperioden definiert. Nur in jeder zweiten Scanperiode erfolgt die gezielte Störung mit einem Kanal mit verändertem Sendemuster. Ein Strahl gilt nur dann als unterbrochen, wenn dies die Auswertung beider Scanperioden ergibt. Das lässt sich auf längere Auswertungszyklen mit mehr als zwei Scanperioden verallgemeinern, in denen dann beispielsweise ein Mehrheitsentscheid stattfindet oder höchstens eine Unterbrechung toleriert wird.

## Patentansprüche

1. Optoelektronischer Sensor (10), insbesondere Lichtgitter, mit einer Sendeeinheit (12) und einer Empfangseinheit (16), die eine Vielzahl von Einzellichtsendern (14) und eine Sendesteuerung (24) zur Aktivierung der Einzellichtsender (14) sowie eine den Einzellichtsendern (14) entsprechende Vielzahl von Einzellichtempfängern (18) und eine mit den Einzellichtempfängern (18) verbundene Empfängersteuerung (26) aufweisen, wobei zur Objekterkennung durch Unterbrechung eines Lichtstrahls (20) von einem Einzellichtsender (14) zu einem zugehörigen Einzellichtempfänger (18) in jeweils einem Einzelstrahlauswertungszeitfenster von der Sendesteuerung (24) die Einzellichtsender (14) zum Aussenden eines Sendesignals und von der Empfängersteuerung (26) die zugehörigen Einzellichtempfänger (18) zum Empfang des Sendesignals nacheinander aktivierbar sind, wobei die Sendesteuerung (24) dafür ausgebildet ist, in einer Scanperiode mit einer Vielzahl aufeinanderfolgender Einzelstrahlauswertungszeitfenster mindestens ein Einzelstrahlauswertungszeitfenster als Testzeitfenster auszuwählen und in dem Testzeitfenster das Sendesignal verändert auszusenden, indem ein Sendemuster des Sendesignals verändert wird,
**dadurch gekennzeichnet,**
**dass** in der Sendersteuerung (24) und in der Empfängersteuerung (26) Gruppen von Einzellichtsendern (14) und zugehörigen Einzellichtempfängern (18) gebildet sind und dass die Sendesteuerung (24) dafür ausgebildet ist, das mindestens eine Testzeitfenster zufällig auszuwählen, wobei in einer Scanperiode jeweils eine Gruppe ausgewählt ist und das mindestens eine Testzeitfenster nur auf eine Gruppe beschränkt zufällig wählbar ist, so dass nur das Sendesignal eines Einzellichtsenders (14) der ausgewählten Gruppe veränderbar ist, wobei die Auswahl einer Gruppe für eine Scanperiode anhand einer in Sendersteuerung (24) und Empfangssteuerung (26) bekannten deterministischen Sequenz erfolgt.

2. Sensor (10) nach Anspruch 1,
wobei die Empfängersteuerung (26) dafür ausgebildet ist, einen Fehlerzustand des Sensors (10) daran zu erkennen, dass während der Scanperiode von den Einzellichtempfängern (18) der ausgewählten Gruppe, eine andere Anzahl nicht veränderter Sendesignale empfangen wird als erwartet.

3. Sensor (10) nach einem der vorhergehenden Ansprüche,
wobei die Sendersteuerung (24) und die Empfängersteuerung (26) dafür ausgebildet sind, in einer Scanperiode jedem Einzellichtsender (14) und jedem Einzellichtempfänger (18) ein Einzellichtstrahlauswertungszeitfenster zuzuweisen.

4. Sensor (10) nach einem der vorhergehenden Ansprüche,
wobei die Auswahl von Testzeitfenstern nur in einem Teil der Scanperioden stattfindet.

5. Sensor (10) nach einem der vorhergehenden Ansprüche,
wobei die Empfängersteuerung (26) dafür ausgebildet ist, einen Eingriff in einen Lichtstrahl (20) zwischen einem Einzellichtsender (14) und einem Einzellichtempfänger (18) zu erkennen, wenn der Einzellichtempfänger (18) in einem Auswertungszyklus mit mindestens zwei aufeinanderfolgenden Scanperioden kein vollständiges Sendesignal empfängt.

6. Sensor (10) nach Anspruch 5,
wobei jeder Auswertungszyklus mindestens eine Scanperiode ohne Testzeitfenster aufweist, oder wobei in jedem Auswertungszyklus jeder Einzellichtsender (14) und jeder zugehörige Einzellichtempfänger (18) in mindestens einem Einzelstrahlauswertungszeitfenster aktiviert ist, das kein Testzeitfenster ist.

7. Sensor (10) nach einem der vorhergehenden Ansprüche,
wobei eine Absicherungseinheit (26) vorgesehen ist, um bei Erkennung eines unzulässigen Eingriffs in einen Lichtstrahl (20) oder bei Erkennung eines Fehlerzustands ein Absicherungssignal, insbesondere ein sicherheitsgerichtetes Abschaltsignal, auszugeben.

8. Verfahren zur Objekterkennung und Fremdsendererkennung mit einem optoelektronischen Sensor (10), der Objekte in einem Überwachungsbereich anhand einer Strahlunterbrechung von mindestens einem Lichtstrahl (20) aus einer Vielzahl von jeweils zwischen einem Einzellichtsender (14) und einem zugehörigen Einzellichtempfänger (18) aufgespannten Lichtstrahlen (20) erkennt, wobei die einzelnen Lichtstrahlen (20) zeitversetzt in jeweiligen Einzelstrahlauswertungszeitfenstern erzeugt und ausgewertet werden, wobei in einer Scanperiode aus einer Vielzahl von Einzelstrahlauswertungszeitfenstern mindestens ein Einzelstrahlauswertungszeitfenster als Testzeitfenster ausgewählt und in dem Testzeitfenster das den Lichtstrahl (20) erzeugende Sendesignal verändert ausgesandt wird, indem ein Sendemuster des Sendesignals verändert wird,
**dadurch gekennzeichnet,**
**dass** das mindestens eine Testzeitfenster zufällig ausgewählt wird, wobei in einer Sendersteuerung (24) und in einer Empfängersteuerung (26) Gruppen von Einzellichtsendern (14) und zugehörigen Einzellichtempfängern (18) gebildet werden, in einer Scanperiode jeweils eine Gruppe ausgewählt wird und die Zufallsauswahl des Testzeitfensters auf solche Einzelstrahlauswertungszeitfenster beschränkt ist, in denen Lichtstrahlen (20) zwischen Einzellichtsendern (14) und Einzellichtempfängern (18) der Gruppe erzeugt und ausgewertet werden, so dass nur das Sendesignal eines Einzellichtsenders (14) der ausgewählten Gruppe veränderbar ist, wobei die Auswahl einer Gruppe für eine Scanperiode anhand einer in Sendersteuerung (24) und Empfängersteuerung (26) bekannten deterministischen Sequenz erfolgt.

9. Verfahren nach Anspruch 8,
wobei ein Fehlerzustand des Sensors (10) daran erkannt wird, dass während einer Scanperiod von den Einzellichtempfängern (18) der ausgewählten Gruppe, eine andere Anzahl nicht veränderter Sendesignale empfangen wird als erwartet.

10. Verfahren nach Anspruch 8 oder 9,
wobei in einer Scanperiode jedem Einzellichtsender (14) und jedem Einzellichtempfänger (18) ein Einzellichtstrahlauswertungszeitfenster zugewiesen wird, und wobei insbesondere die Auswahl von Testzeitfenstern nur in einem Teil der Scanperioden stattfindet.

11. Verfahren nach einem der Ansprüche 8 bis 10,
wobei eine Strahlunterbrechung erkannt wird, wenn ein Einzellichtempfänger (18) in einem Auswertungszyklus mit mindestens zwei aufeinanderfolgenden Scanperioden kein vollständiges Sendesignal empfängt, und wobei insbesondere jeder Auswertungszyklus mindestens eine Scanperiode ohne Testzeitfenster aufweist oder in jedem Auswertungszyklus jeder Einzellichtsender (14) und jeder zugehörige Einzellichtempfänger (18) in mindestens einem Einzelstrahlauswertungszeitfenster aktiviert ist, das kein Testzeitfenster ist.

12. Verfahren nach einem der Ansprüche 8 bis 11,
wobei eine Absicherungseinheit (26) vorgesehen ist, von der bei Erkennung eines unzulässigen Eingriffs in einen Lichtstrahl (20) oder bei Erkennung eines Fehlerzustands ein Absicherungssignal, insbesondere ein sicherheitsgerichtetes Abschaltsignal, ausgegeben wird.

## Claims

1. An optoelectronic sensor (10), in particular a light grid, having a transmission unit (12) and having a reception unit (16) that comprise a plurality of individual light transmitters (14) and a transmission control (24) for the activation of the individual light transmitters (14), as well as a number of individual light receivers (18) corresponding to the individual light transmitters (14) and a receiver control (26) connected to the individual light receivers (18), wherein, for object detection through an interruption of a light beam (20) from an individual light transmitter (14) to an associated individual light receiver (18), in a respective one individual beam evaluation time window, the individual light transmitters (14) can be activated one after the other by the transmission control (24) for the transmission of a transmission signal and the associated individual light receivers (18) can be activated one after the other by the receiver control (26) for the reception of the transmission signal, wherein the transmission control (24) is configured to select at least one individual beam evaluation time window as a test time window in a scanning period having a plurality of consecutive individual beam evaluation time windows and to transmit the transmission signal changed in that in the test time window a transmission pattern of the transmission signal is changed,
**characterized in that**
groups of individual light transmitters (14) and associated individual light receivers (18) are formed in the transmission control (24) and in the receiver control (26) and **in that** the transmission control (24) is configured to randomly select the at least one test time window, wherein a group is respectively selected in a scanning period and the at least one test time window can be selected randomly only with regard to one group in such a way that only the transmission signal of one individual light transmitter (14) of the selected group can be changed, wherein the selection of one group for a scanning period takes place with reference to a deterministic sequence known in the transmission control (24) and in the receiver control (26).

2. A sensor (10) in accordance with claim 1,
wherein the receiver control (26) is configured to recognize an error state of the sensor (10) from the fact that, during the scanning period, a number of unchanged transmission signals is received by the individual light receivers (18) of the selected group that is different from that expected.

3. A sensor (10) in accordance with one of the preceding claims,
wherein the transmission control (24) and the receiver control (26) are configured to assign an individual light beam evaluation time window to each individual light transmitter (14) and to each individual light receiver (18) in a scanning period.

4. A sensor (10) in accordance with any one of the preceding claims,
wherein the selection of test time windows only takes place in some of the scanning periods.

5. A sensor (10) in accordance with any of the preceding claims,
wherein the receiver control (26) is configured to recognize an interception of a light beam (20) between an individual light transmitter (14) and an individual light receiver (18) when the individual light receiver (18) receives no complete transmission signal in an evaluation cycle, having at least two successive scanning periods.

6. A sensor (10) in accordance with claim 5,
wherein each evaluation cycle has at least one scanning period without test time windows or wherein, in each evaluation cycle, each individual light transmitter (14) and each associated individual light receiver (18) is activated in at least one individual beam evaluation time window that is not a test time window.

7. A sensor (10) in accordance with any one of the preceding claims,
wherein a securing unit (26) is provided in order to output a securing signal, in particular a safety-related switch off signal, on recognition of an unauthorized interception of a light beam (20) or on recognition of an error state.

8. A method for the detection of objects and for external transmission recognition with an optoelectronic sensor (10) that recognizes objects in a monitored zone with reference to a beam interruption of at least one light beam (20) from a plurality of light beams (20) respectively spanned between an individual light transmitter (14) and an associated individual light receiver (18), wherein the individual light beams (20) are generated and evaluated displaced in time in respective individual beam evaluation time windows, wherein, in a scanning period, at least one individual beam evaluation time window is selected as a test time window from a plurality of individual beam evaluation time windows and the transmission signal generating the light beam (20) is transmitted changed in the test time window in that a transmission pattern of the transmission signal is changed,
**characterized in that**
the at least one time window is randomly selected, wherein groups of individual light transmitters (14) and associated individual light receivers (18) are formed in a transmission control (24) and in a receiver control (26); a group is respectively selected in a scanning period; and the random selection of the test time window is limited to such individual beam evaluation time windows in which light beams (20) between individual light transmitters (14) and individual light receivers (18) of the group are generated and evaluated so that only the transmission signal of one individual light transmitter (14) of the selected group can be changed, wherein the selection of a group for a scanning period takes place with reference to a deterministic sequence known in the transmission control (24) and in the receiver control (26).

9. A method in accordance with claim 8,
wherein an error state of the sensor (10) is recognized from the fact that a different number of unchanged transmission signals is received than expected by the individual light receivers (18) of the selected group during a scanning period.

10. A method in accordance with claim 8 or claim 9,
wherein an individual light beam evaluation time window is assigned to each individual light transmitter (14) and to each individual light receiver (18) in a scanning period and wherein in particular the selection of test time windows only takes place in a part of the scanning periods.

11. A method in accordance with any one of the claims 8 to 10,
wherein a beam interruption is recognized when an individual light receiver (18) receives no complete transmission signal in an evaluation cycle having at least two successive scanning periods and wherein in particular each of the evaluation cycles has at least one scanning period without test time windows or that each individual light transmitter (14) and each associated individual light receiver (18) is active in each evaluation cycle in at least one individual beam evaluation time window that is not a test time window.

12. A method in accordance with any one of the claims 8 to 11,
wherein a securing unit (26) is provided from which a securing signal, in particular a safety-related switch off signal, is output on recognition of a unauthorized interception of a light beam (20) or on recognition of an error state.

## Revendications

1. Capteur optoélectronique (10), en particulier grille lumineuse, comprenant une unité d'émission (12) et une unité de réception (16), qui comprennent une pluralité d'émetteurs de lumière individuels (14) et une commande d'émission (24) pour activer les émetteurs de lumière individuels (14), ainsi qu'une pluralité, correspondant aux émetteurs de lumière Individuels (14), de récepteurs de lumière individuels (18) et une commande de réception (26) reliée aux récepteurs de lumière individuels (18), dans lequel, pour la reconnaissance d'objets par interruption d'un rayon de lumière (20) depuis un émetteur de lumière individuel (14) vers un récepteur de lumière individuel (18) associé, dans une fenêtre temporelle respective d'évaluation de rayon individuel, les émetteurs de lumière individuels (14) sont susceptibles d'être activés les uns après les autres par la commande d'émission (24) afin d'émettre un signal d'émission, et les récepteurs de lumière individuels associés (18) sont susceptibles d'être activés les uns après les autres par la commande de réception (26) afin de recevoir le signal d'émission, dans lequel la commande d'émission (24) est réalisée pour sélectionner à titre de fenêtre temporelle test dans une période de scannage comprenant une pluralité de fenêtres temporelles d'évaluation de rayons individuels successives au moins une fenêtre temporelle d'évaluation de rayon individuel et pour émettre le signal d'émission modifié dans la fenêtre temporelle test, en modifiant un motif d'émission du signal d'émission,
**caractérisé en ce que**
dans la commande d'émission (24) et dans la commande de réception (26) des groupes d'émetteurs de lumière individuels (14) et des groupes associés de récepteurs de lumière individuels (18) sont formés, et **en ce que** la commande d'émission (24) est réalisée pour sélectionner de manière aléatoire ladite au moins une fenêtre temporelle test, dans lequel dans une période de scannage un groupe respectif est sélectionné et ladite au moins une fenêtre temporelle test est susceptible d'être sélectionnée de manière aléatoire uniquement sur un groupe, de sorte que seul le signal d'émission d'un émetteur de lumière individuel (14) du groupe sélectionné est modifiable, et la sélection d'un groupe pour une période de scannage a lieu au moyen d'une séquence déterministe connue dans la commande d'émission (24) et la commande de réception (26).

2. Capteur (10) selon la revendication 1,
dans lequel la commande de réception (26) est réalisée pour reconnaître un état d'erreur du capteur (10) du fait que pendant la période de scannage les récepteurs de lumière individuels (18) du groupe sélectionné reçoivent un nombre de signaux d'émission non modifiés différent de celui qui est attendu.

3. Capteur (10) selon l'une des revendications précédentes,
dans lequel la commande d'émission (24) et la commande de réception (26) sont réalisées pour attribuer dans une période de scannage à chaque émetteur de lumière individuelle (14) et à chaque récepteur de lumière individuelle (18) une fenêtre temporelle d'évaluation de rayon de lumière individuelle.

4. Capteur (10) selon l'une des revendications précédentes,
dans lequel la sélection de fenêtres temporelles test a lieu uniquement dans une partie des périodes de scannage.

5. Capteur (10) selon l'une des revendications précédentes,
dans lequel la commande de réception (26) est réalisée pour reconnaître une intervention dans un rayon de lumière (20) entre un émetteur de lumière individuel (14) et un récepteur de lumière individuel (18) quand le récepteur de lumière individuel (18) ne reçoit aucun signal d'émission complet dans un cycle d'évaluation comprenant au moins deux périodes de scannage successives.

6. Capteur (10) selon la revendication 5,
dans lequel chaque cycle d'évaluation comprend au moins une période de scannage sans fenêtre temporelle test, ou dans lequel dans chaque cycle d'évaluation chaque émetteur de lumière individuel (14) et chaque récepteur de lumière individuel associé (18) est activé dans au moins une fenêtre temporelle d'évaluation de rayon individuel qui n'est pas une fenêtre temporelle test.

7. Capteur (10) selon l'une des revendications précédentes,
dans lequel il est prévu une unité de sécurisation (28) afin de délivrer un signal de sécurisation, en particulier un signal de coupure à vocation de sécurité, lors de la reconnaissance d'une intervention inadmissible dans un rayon de lumière (20) ou de la reconnaissance d'un état d'erreur.

8. Procédé pour la reconnaissance d'objets et la reconnaissance d'émissions parasites avec un capteur optoélectronique (10), qui reconnaît des objets dans une zone de surveillance au moyen d'une interruption d'au moins un rayon de lumière (20) parmi une pluralité de rayons de lumière (20) respectivement tendus entre un émetteur de lumière individuel (14) et un récepteur de lumière individuel associé (18), dans lequel les rayons de lumière individuels (20) sont engendrées et évalués de manière décalée dans le temps dans des fenêtres temporelles d'évaluation de rayon individuel respectives, dans lequel on sélectionne à titre de fenêtre temporelle test dans une période de scannage d'une pluralité de fenêtres temporelles d'évaluation de rayon individuel, au moins une fenêtre temporelle d'évaluation de rayon individuel, et on émet de façon modifiée dans la fenêtre temporelle test le signal d'émission qui engendre le rayon de lumière (20), du fait que l'on modifie un motif d'émission du signal d'émission,
**caractérisé en ce que**
ladite au moins une fenêtre temporelle test est sélectionnée de manière aléatoire, dans lequel des groupes d'émetteurs de lumière individuels (14) et de récepteurs de lumière individuels associés (18) sont formés dans une commande d'émission (24) et dans une commande de réception (26), on sélectionne un groupe respectif dans une période de scannage et la sélection aléatoire de la fenêtre temporelle test est limitée à des fenêtres temporelles d'évaluation de rayon individuel dans lesquelles des rayons de lumière (20) sont engendrés entre des émetteurs de lumière individuels (14) et des récepteurs de lumière individuels (18) du groupe et sont évalués, de sorte que le seul le signal d'émission d'un émetteur de lumière individuel (14) du groupe sélectionné est modifiable, et la sélection d'un groupe pour une période de scannage a lieu au moyen d'une séquence déterministe connue dans la commande d'émission (24) et dans la commande de réception (26).

9. Procédé selon la revendication 8,
dans lequel un état d'erreur du capteur (10) est reconnu du fait que pendant une période de scannage les récepteurs de lumière individuels (18) du groupe sélectionné reçoivent un nombre de signaux d'émission non modifiés autre que celui qui est attendu.

10. Procédé selon la revendication 8 ou 9,
dans lequel dans une période de scannage une fenêtre temporelle d'évaluation de rayon de lumière individuel est attribuée à chaque émetteur de lumière individuel (14) et à chaque récepteur de lumière individuel (18), et dans lequel en particulier la sélection de fenêtres temporelles test a lieu uniquement dans une partie des périodes de scannage.

11. Procédé selon l'une des revendications 8 à 10,
dans lequel on reconnaît une interruption du rayon quand un récepteur de lumière individuel (18) ne reçoit aucun signal d'émission complet dans un cycle d'évaluation avec au moins deux périodes de scannage successives, et dans lequel chaque cycle d'évaluation comprend en particulier au moins une période de scannage sans fenêtre temporelle test ou bien, dans chaque cycle d'évaluation, chaque émetteur de lumière individuel (14) et chaque récepteur de lumière individuel associé (18) est activé dans au moins une fenêtre temporelle d'évaluation de rayon individuel qui n'est pas une fenêtre temporelle test.

12. Procédé selon l'une des revendications 8 à 11,
dans lequel il est prévu une unité de sécurisation (26) depuis laquelle un signal de sécurisation, en particulier un signal de coupure à vocation de sécurité, est délivré en cas de reconnaissance d'une intervention inadmissible dans un rayon de lumière (20) ou de reconnaissance d'un état d'erreur.
